# EUROPEAN PATENT APPLICATION

(11) **EP 4 772 444 A1**
(43) Date of publication of application: **08.07.2026**
(21) Application number: 24859526.6
(22) Date of filing: 19.08.2024
(51) Int. Cl.: B64U 70/83, B64U 10/13, B64U 20/80, B64U 101/47, B64U 101/57

(54) **SAFETY DEVICE AND AIRCRAFT PROVIDED WITH SAFETY DEVICE**

(30) Priority: 29.08.2023 JP 2023139384
(71) Applicant: Nippon Kayaku Kabushiki Kaisha, Tokyo 100-0005 (JP)
(72) Inventor: NISHIO, Kensuke, Himeji-shi, Hyogo 679-2123 (JP); NAKAMURA, Hiroshi, Himeji-shi, Hyogo 679-2123 (JP)
(74) Representative: Gille Hrabal Partnerschaftsgesellschaft mbB Patentanwälte
(86) International application number: PCT/JP2024/029367
(87) International publication number: WO 2025/047493

(57) **Abstract**

A safety device, for a flight vehicle, capable of suppressing damage to a top plate portion of a lid, and a flight vehicle including the safety device are provided. A safety device 100 includes a container 10 including a lid 12, an ejection object 20 contained in the container 10, and an actuator 30 including a piston member 31 that slides toward one side to push the lid 12 from the inside to remove the lid 12 and including a gas generator 38 that generates a driving force for sliding of the piston member 31. The lid 12 includes a top plate portion 12a positioned on the one side with respect to the piston member 31 and curved convexly toward the one side, and a receiving portion 12b that protrudes from an inner surface of the top plate portion 12a toward the other side and receives the piston member 31.

## Description

### TECHNICAL FIELD

The present invention relates to a safety device and a flight vehicle including the safety device.

### BACKGROUND ART

The recent development of autonomous control technology and flight control technology is being accompanied by accelerated industrial use of a flight vehicle including a plurality of rotors, for example, called a drone. A drone flies, for example, by simultaneously rotating a plurality of rotors in a balanced manner, and ascends and descends by increasing or decreasing the rotation speed of the rotors, and can move forward and backward by inclining the airframe via increasing or decreasing the rotation speed of the rotors. Such flight vehicles are not only used for activities at a disaster, cargo transportation, landscape photographing, and the like, but also expected to carry a person, and expanded worldwide use of such flight vehicles is expected in the future.

Meanwhile, for example, the risk of an accidental fall of a flight vehicle as described above is considered to be serious, and thus the spread of flight vehicles is obstructed. For the purpose of, for example, reduction in the risk of such an accidental fall, safety devices such as a parachute device for a flight vehicle are becoming commercially available.

For example, Patent Literature 1 discloses a device including a container including a lid, an ejection object contained in the container, and a member capable of pushing the lid from the inside to remove the lid.

### CITATIONS LIST

### PATENT LITERATURE

Patent Literature 1: Chinese Patent Application Publication No. 111361738

### SUMMARY OF INVENTION

### TECHNICAL PROBLEMS

When the lid is pushed from the inside by a pushing force generated by the actuator (a pushing force obtained by using a driving force from the actuator) in order to remove the lid, if the top plate portion of the lid is damaged, the ejection object contained in the container may be not appropriately ejected. Therefore, in order to remove the lid with an appropriate pushing force without damage to the top plate portion of the lid, an adjustment may be necessary such that, for example, the pushing force becomes lower than in conventional cases. However, in a case where the driving force from the actuator is also used for ejecting the ejection object and the pushing force is adjusted to become lower, the manufacture of the safety device is complicated, and in addition, the ejection force at the time of ejecting the ejection object is reduced, and thus the ejection object may be not sufficiently ejected.

Therefore, an object of the present invention is to provide a safety device capable of ejecting an ejection object sufficiently without an adjustment such that, for example, a pushing force (driving force) generated by an actuator becomes lower than in conventional cases, and capable of further suppressing damage to a top plate portion of a lid when the lid is pushed from the inside in order to remove the lid than in conventional cases, and to provide a flight vehicle including the safety device.

### SOLUTIONS TO PROBLEMS

(1) The safety device according to the present invention is a safety device for a flight vehicle, and includes a container including a lid, an ejection object contained in the container, and an actuator including a sliding member that slides toward one side to push the lid from an inside to remove the lid and including a power source that generates a driving force for sliding of the sliding member toward the one side, the lid includes a top plate portion that is positioned on the one side with respect to the sliding member and includes a curved surface being curved convexly toward the one side and formed in at least a part of an outer surface of the top plate portion, and the lid includes a receiving portion that protrudes from an inner surface of the top plate portion toward a side opposite from the one side and receives the sliding member when the sliding member slides toward the one side.
(2) In the safety device of (1), the top plate portion preferably at least partly includes a hollow hemispherical portion or a dome-shaped portion, and the curved surface is preferably formed in at least a part of the hollow hemispherical portion or the dome-shaped portion of the top plate portion.
(3) In the safety device of (1) or (2), the receiving portion preferably includes a receiving surface that is orthogonal to a sliding direction of the sliding member and receives the sliding member when the sliding member slides toward the one side, and the sliding member preferably includes a surface that pushes the receiving surface at a time of activation and is formed at an end portion of the sliding member on a side facing the receiving surface.
(4) The safety device of (1) or (2) preferably includes a trigger device including an activation unit that activates the actuator in at least one of a case where a state of the flight vehicle is determined to be an abnormal state or a case where an instruction to activate the actuator is received from an operator of the flight vehicle.
(5) In the safety device of (4), the flight vehicle preferably includes an airframe and one or more propulsion mechanisms coupled to the airframe and configured to propel the airframe, the trigger device preferably includes a determination unit that determines whether the flight vehicle is in an abnormal state, and the trigger device preferably includes a stop unit that stops the one or more propulsion mechanisms when the determination unit determines that the flight vehicle is in an abnormal state.
(6) In the safety device of (4), the trigger device preferably includes a determination unit that determines whether the flight vehicle is in an abnormal state, and the trigger device preferably includes a storage unit that stores a determination data when the determination unit determines that the flight vehicle is in an abnormal state.
(7) In the safety device of (4), the trigger device preferably includes a determination unit that determines whether the flight vehicle is in an abnormal state, and the trigger device preferably includes a notification unit that notifies that the flight vehicle is in an abnormal state using at least one of sound or light when the determination unit determines that the flight vehicle is in an abnormal state.
(8) In the safety device of (1) or (2), the ejection object is preferably a pilot chute, and the safety device preferably includes a parachute connected to the pilot chute.
(9) In the safety device of (1) or (2), the ejection object is preferably a float parachute, a net, a fire extinguishing agent, a life saving tool, or a medicine.
(10) The flight vehicle according to the present invention includes an airframe, the safety device of (1) or (2) coupled to the airframe, and one or more propulsion mechanisms coupled to the airframe and configured to propel the airframe.

### ADVANTAGEOUS EFFECTS OF INVENTION

According to the present invention, it is possible to provide a safety device capable of ejecting an ejection object sufficiently without an adjustment such that, for example, a pushing force (driving force) generated by an actuator becomes lower than in conventional cases, and capable of further suppressing damage to a top plate portion of a lid when the lid is pushed from the inside in order to remove the lid than in conventional cases, and provide a flight vehicle including the safety device.

### BRIEF DESCRIPTION OF DRAWINGS

FIG. 1 is a perspective view illustrating a safety device according to a first embodiment of the present invention.
FIG. 2 is a side view illustrating the safety device of FIG. 1.
FIG. 3 is a plan view illustrating the safety device of FIG. 1.
FIG. 4 is a sectional view taken along the line A-A in FIG. 3.
FIG. 5 is a sectional view taken along the line B-B in FIG. 3.
FIG. 6 is a block diagram illustrating a function configuration of the safety device of FIG. 1.
FIG. 7 is a front view illustrating a flight vehicle including the safety device of FIG. 1.
FIG. 8 is a schematic view illustrating an analysis result of a lid according to a first comparative example.
FIG. 9 is a schematic view illustrating an analysis result of a lid according to a second comparative example.
FIG. 10 is a schematic view illustrating an analysis result of a lid according to a first example.
FIG. 11 is a sectional view illustrating a lid according to a first modification example.
FIG. 12 is a sectional view illustrating a lid according to a second modification example.
FIG. 13 is a schematic view illustrating an analysis result of a lid according to a second example.
FIG. 14 is a sectional view illustrating a safety device according to a second embodiment of the present invention.
FIG. 15 is a sectional view illustrating a safety device according to a third embodiment of the present invention.

### DESCRIPTION OF EMBODIMENTS

### <First embodiment>

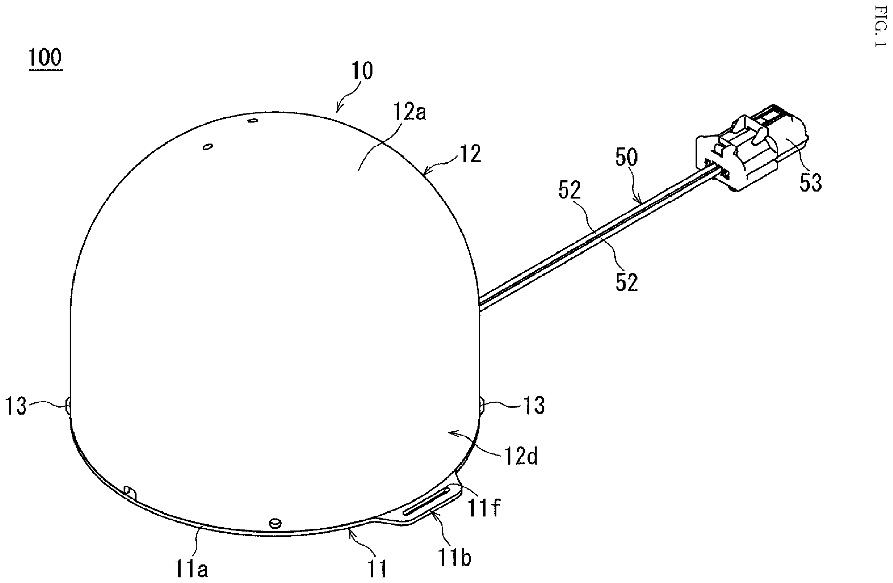

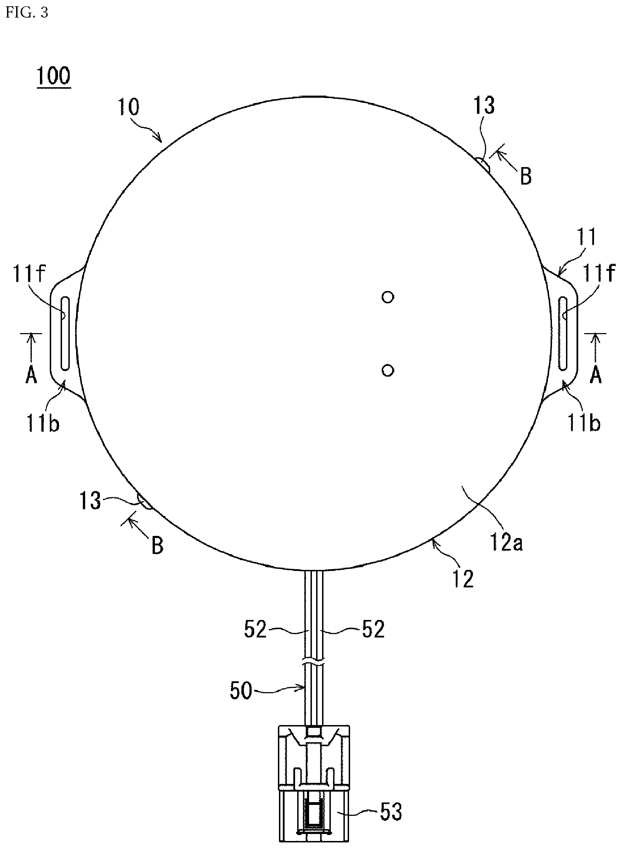

Hereinafter, a safety device and a flight vehicle according to a first embodiment of the present invention will be described with reference to FIGS. 1 to 10.

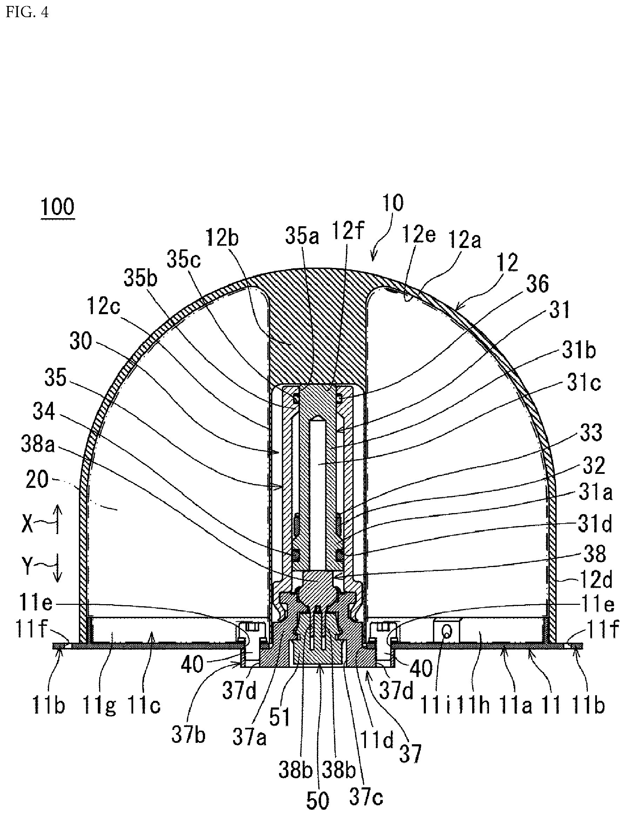

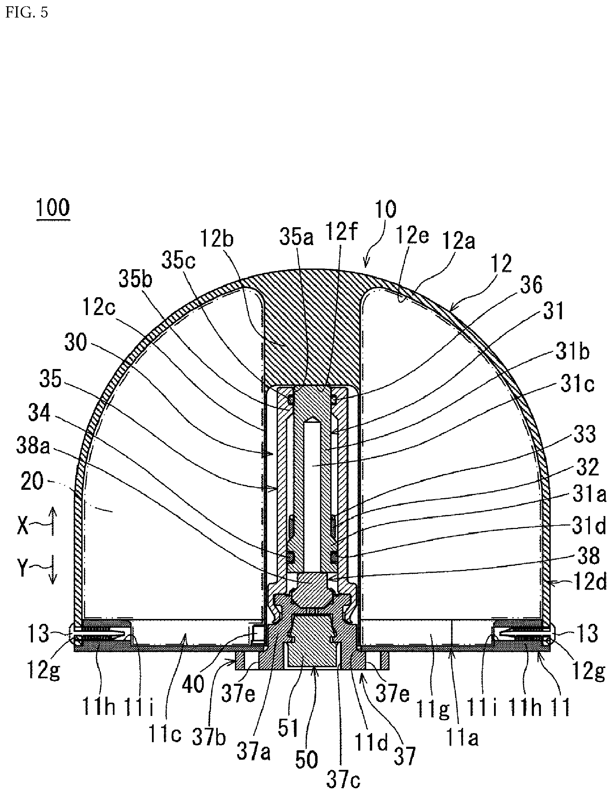

First, a safety device 100 will be described with reference to FIGS. 1 to 6. As illustrated in FIGS. 1 to 5, the safety device 100 includes a container 10, an ejection object 20, an actuator 30, a plurality of bolts 40, and a harness 50. In FIGS. 4 and 5, the ejection object 20 is virtually indicated by a two-dot chain line.

The container 10 contains the ejection object 20. The container 10 includes a main body 11, a lid 12, and a plurality of pins 13.

The ejection object 20 is disposed on the lid 12 side of the main body 11. The main body 11 includes a bottom portion 11a, a plurality of protruding portions 11b, and a side wall portion 11c.

The bottom portion 11a has a plate shape such that the thickness direction corresponds to a sliding direction in which a piston member 31 slides. Hereinafter, the sliding direction in which the piston member 31 slides may be simply referred to as the sliding direction. The bottom portion 11a has a circular shape when viewed from the sliding direction. The bottom portion 11a includes a bore 11d and a plurality of bores 11e.

The bore 11d is formed in the central portion of the bottom portion 11a and penetrates the bottom portion 11a in the sliding direction. The actuator 30 is inserted into the bore 11d.

Each of the plurality of bores 11e is formed radially outward from the central portion of the bottom portion 11a. The plurality of bores 11e are arranged at equal intervals around the bore 11d. Each of the plurality of bores 11e penetrates the bottom portion 11a in the sliding direction. Into each of the plurality of bores 11e, a bolt 40 for fixing of the container 10 and the actuator 30 is inserted.

Each of the plurality of protruding portions 11b has a plate shape having a thickness direction in the sliding direction. Each of the plurality of protruding portions 11b protrudes outward from the outer peripheral portion of the bottom portion 11a. The plurality of protruding portions 11b are disposed at intervals of 180 degrees. Each of the plurality of protruding portions 11b includes a bore 11f. The bore 11f penetrates the protruding portion 11b in the sliding direction.

The side wall portion 11c includes an annular portion 11g, a plurality of protruding portions 11h, and a plurality of bores 11i.

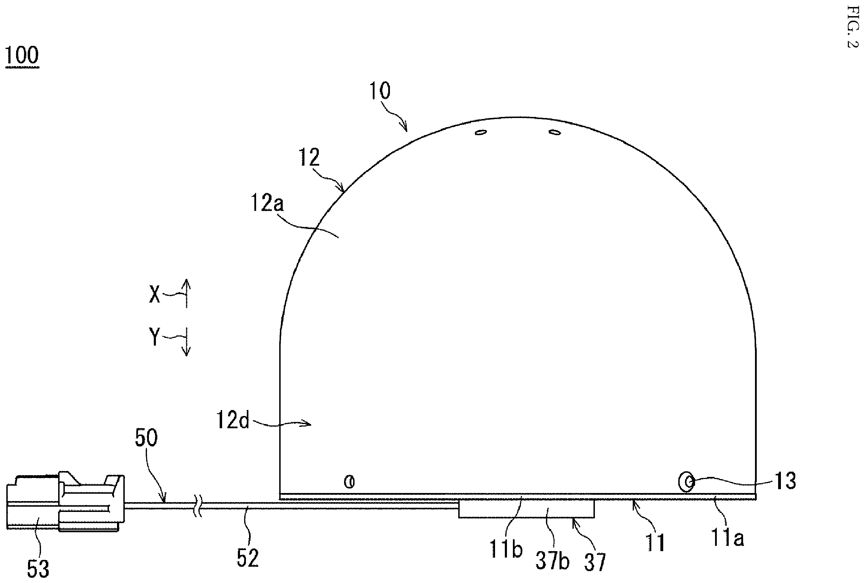

The annular portion 11g protrudes toward one side (the side indicated by the arrow X in FIG. 2 and the like, and the same applies hereinafter) from a main surface on the one side of the bottom portion 11a. The one side is a side to which the piston member 31 slides by a driving force generated by a gas generator 38. When viewed from the sliding direction, the annular portion 11g has an annular shape, and the center of the annular portion 11g coincides with the center of the bottom portion 11a. The annular portion 11g is disposed slightly inside the outer peripheral portion of the bottom portion 11a.

Each of the plurality of protruding portions 11h protrudes inward from the inner peripheral portion of the annular portion 11g. The plurality of protruding portions 11h are arranged at equal intervals in the circumferential direction of the annular portion 11g.

The plurality of bores 11i are provided corresponding to the plurality of protruding portions 11h. Each of the plurality of bores 11i penetrates the annular portion 11g and the protruding portion 11h corresponding to the bore 11i in the radial direction of the annular portion 11g.

The lid 12 is attached to the main body 11. The lid 12 has a bottomed cylindrical shape opened toward the other side (the side indicated by the arrow Y in FIG. 2 and the like, and the same applies hereinafter). The other side is a side opposite from the side to which the piston member 31 slides by a driving force generated by the gas generator 38. For example, the lid 12 is formed using CFRP. The lid 12 includes a top plate portion 12a, a receiving portion 12b, a cylindrical portion 12c, and a side wall portion 12d.

The top plate portion 12a is positioned on the one side with respect to the piston member 31. The top plate portion 12a is convexly curved toward the one side. The top plate portion 12a has an outer surface including a curved surface convexly curved toward the one side. Here, the curved surface is formed in at least a part of the outer surface of the top plate portion 12a. The curved surface is particularly preferably formed at least in an outer surface portion of the top plate portion 12a facing a portion (for example, a joint portion of the receiving portion 12b to the top plate portion 12a) to which a stress transmitted from the receiving portion 12b is likely to be applied at the time of activation. However, the curved surface may extend over an area larger than the outer surface portion of the top plate portion 12a facing the portion to which a stress transmitted from the receiving portion 12b is likely to be applied at the time of activation.

The top plate portion 12a also has an inner surface 12e curved concavely toward the one side. The top plate portion 12a constitutes a part of the outer shell of the container 10.

In the present embodiment, the top plate portion 12a has a hollow hemispherical shape or a dome shape. Each of the outer surface and the inner surface 12e of the top plate portion 12a has a hemispherical shape. An end portion on the other side of the top plate portion 12a has an annular shape when viewed from the sliding direction. The top plate portion 12a is disposed so as to cover the side of an end portion on the one side of the piston member 31.

The receiving portion 12b protrudes from the inner surface 12e of the top plate portion 12a toward the other side. In the present embodiment, the receiving portion 12b protrudes from the central portion of the inner surface 12e toward the other side. The receiving portion 12b has a columnar shape. The receiving portion 12b is positioned on the one side with respect to the piston member 31, and receives the piston member 31 when the piston member 31 slides toward the one side. Thus, a load generated when the piston member 31 pushes the lid 12 is applied to the top plate portion 12a via the receiving portion 12b. For example, the dimension of the receiving portion 12b in the sliding direction is changed according to the size of the ejection object 20. The larger the size of the ejection object 20 is, the larger the container 10 needs to be, so that, for example, the sizes of the cylindrical portion 12c and the side wall portion 12d in the sliding direction are increased, and with these increases, the size of the receiving portion 12b in the sliding direction is also increased. Thus, the container 10 can be enlarged without changing the distance between the actuator 30 and the receiving portion 12b. For example, the receiving portion 12b is formed by layering CFRP. The receiving portion 12b includes a receiving surface 12f.

The receiving surface 12f is an end surface on the other side of the receiving portion 12b. The receiving surface 12f is positioned on the one side with respect to the piston member 31, and receives the piston member 31 when the piston member 31 slides toward the one side. In the present embodiment, the receiving surface 12f is orthogonal to the sliding direction.

The cylindrical portion 12c extends from the outer peripheral portion of the receiving portion 12b toward the other side. The cylindrical portion 12c is formed into a cylindrical shape along the outer peripheral portion of the receiving portion 12b and is opened toward the other side. The actuator 30 is disposed inside the cylindrical portion 12c.

The side wall portion 12d extends from the end portion on the other side of the top plate portion 12a toward the other side. The side wall portion 12d is formed into a cylindrical shape along the end portion on the other side of the top plate portion 12a. The side wall portion 12d is opened toward the other side. An end portion on the other side of the side wall portion 12d is formed to be fitted to the annular portion 11g. Specifically, the inner peripheral surface of the end portion on the other side of the side wall portion 12d is formed to be fitted to the outer peripheral surface of the annular portion 11g. As illustrated in FIG. 5, the side wall portion 12d includes a plurality of bores 12g. Here, the ratio of the outer diameter of the side wall portion 12d to the length from an end portion of the side wall portion 12d on the main body 11 side to the top of the top plate portion 12a is preferably 1 : 1 to 1 : 1.5. In a case where the top plate portion 12a has a hollow hemispherical shape, the outer radius of the top plate portion 12a is half the outer diameter of the side wall portion 12d.

The plurality of bores 12g are provided corresponding to the plurality of bores 11i. Each of the plurality of bores 12g penetrates the side wall portion 12d in the same direction as the direction of penetration by the bore 11i corresponding to the bore 12g, and communicates with the bore 11i.

Each of the plurality of pins 13 is inserted through the bore 11i and the bore 12g. The lid 12 is fixed to the main body 11 by inserting each of the plurality of pins 13 through the bore 11i and the bore 12g. For example, when the piston member 31 pushes the lid 12 toward the one side, each of the plurality of pins 13 is broken, and thus the lid 12 is removed from the main body 11. When the piston member 31 pushes the lid 12 toward the one side, the lid 12 may be detached from the main body 11 by breaking the side wall portion 12d from the bores 11i.

The ejection object 20 is contained in the container 10. Specifically, the ejection object 20 is contained outside the cylindrical portion 12c. The ejection object 20 is ejected from the container 10 after removal of the lid 12. For example, in a case where the lid 12 is removed from the main body 11 during dropping of a flight vehicle 1 (described below) to which the safety device 100 is coupled, the ejection object 20 becomes in a state of being exposed to the outside, and is ejected from the main body 11 by wind pressure or the like, or ejected so as to be pulled out from the main body 11 by, for example, a string-shaped joining member (not illustrated) joined to the lid 12. The ejection object 20 may be ejected from the main body 11 as follows. A support member (a member having a whole shape similar to that of a hat) is provided that extends from the piston member 31 and supports the ejection object 20, the piston member 31 is slid toward the one side to remove the lid 12 from the main body 11 and move the support member toward the one side, and the support member is moved toward the one side to eject the ejection object 20 supported by the support member from the main body 11. In the present embodiment, the ejection object 20 is a parachute or a paraglider. For example, the parachute is a float parachute. The float parachute is a parachute with a float (ring float). The ejection object 20 may be a net for capturing or binding, a fire extinguishing agent, a life saving tool, a medicine, or the like.

The actuator 30 is partly positioned inside the container 10 and contained in the container 10. The actuator 30 includes the piston member 31, a tubular member 32, a holding member 33, a seal member 34, a cylinder 35, a seal member 36, a base 37, and the gas generator 38.

The piston member 31 is an example of a sliding member that slides toward the one side to push the lid 12 from the inside to remove the lid 12. The lid 12 (receiving portion 12b) is positioned on the one side with respect to the piston member 31, the piston member 31 slides toward the one side, thus the piston member 31 comes into contact with the lid 12 (receiving portion 12b) to push the lid 12 (receiving portion 12b) toward the one side, and the pushing of the lid 12 (receiving portion 12b) toward the one side removes the lid 12 from the main body 11. The piston member 31 is pushed up toward the one side by a driving force generated by the gas generator 38, and slides toward the one side with respect to the cylinder 35. The piston member 31 extends in the sliding direction. The piston member 31 includes a main body 31a, a rod-shaped portion 31b, a bore 31c, and a groove 31d.

The main body 31a is a portion having approximately the same outer diameter as the inner diameter of the cylinder 35, and has a surface (surface in contact with the receiving surface 12f in the initial state) formed at an end portion on the top plate portion 12 side so as to be capable of pushing the receiving surface 12f at the time of activation. The rod-shaped portion 31b is a portion being connected to the main body 31a, extending from an end portion on the one side of the main body 31a toward the one side, and having a smaller diameter than the main body 31a. The bore 31c is provided inside the main body 31a and the rod-shaped portion 31b. The bore 31c is formed along the central axis of the piston member 31 from an end portion on the other side of the main body 31a to the middle of the rod-shaped portion 31b. Thus, the piston member 31 has a lighter weight than in a case where the bore 31c is not formed. The groove 31d is provided along the circumferential direction of the main body 31a on the outer peripheral surface of the main body 31a.

The tubular member 32 is fitted or loosely fitted at an end portion on the other side of the rod-shaped portion 31b in a state of being in contact with the main body 31a. Although a gap may be present between the inner peripheral surface of the tubular member 32 and the outer peripheral surface of the rod-shaped portion 31b, the gap is to be within a range such that plastic deformation due to approximately uniform compression is not prevented at the time of collision between the holding member 33 and a stopper portion 35b of the cylinder 35. The material of the tubular member 32 is a plastically deformable material having a lower tensile strength than the piston member 31 (for example, a metal such as iron, aluminum, brass, or copper, an alloy such as stainless steel, or a resin) (examples of the material include metals such as aluminum and brass, alloys such as stainless steel, and resins such as polyamide synthetic resins such as monomer cast nylon, nylon 6, nylon 6,6, and nylon 4,6). The tubular member 32 and the inner peripheral surface of the cylinder 35 are separated from each other by a predetermined distance (for example, the distance such that when the holding member 33 collides with the stopper portion 35b of the cylinder 35, the tubular member 32 plastically deformed by approximately uniform compression does not come into contact with the inner peripheral surface of the cylinder 35) or more so that the tubular member 32 does not come into contact with the inner peripheral surface of the cylinder 35. Thus, even if the holding member 33 collides with the stopper portion 35b of the cylinder 35 and is plastically deformed, the tubular member 32 is deformed without being prevented by the inner peripheral surface of the cylinder 35, and sufficiently alleviates the impact of the piston member 31.

The holding member 33 holds the tubular member 32 in a state of being in contact with the main body 31a at the end portion on the other side of the rod-shaped portion 31b. The holding member 33 may be an elastic member such as rubber, may be made of the same material as the tubular member 32, and may have a ring shape or a clip shape.

The seal member 34 is provided in the groove 31d along the circumferential direction of the main body 31a. The seal member 34 is in contact with the groove 31d and the inner peripheral surface of the cylinder 35. The seal member 34 is an O-ring or the like.

The cylinder 35 contains the piston member 31 and slidably supports the piston member 31. The cylinder 35 extends in the sliding direction. The cylinder 35 includes a bore 35a, the stopper portion 35b, and a groove 35c.

The bore 35a is a bore for the piston member 31 to protrude toward the one side with respect to the cylinder 35 at the time of activation. The bore 35a penetrates an end portion on the one side of the cylinder 35 in the sliding direction. The piston member 31 is inserted into the bore 35a. The stopper portion 35b is formed inside the end portion on the one side of the cylinder 35. The stopper portion 35b is disposed so as to surround a part of the rod-shaped portion 31b of the piston member 31 and is cylindrical. The stopper portion 35b limits the sliding range of the piston member 31 toward the one side. Collision of the holding member 33 with the stopper portion 35b restricts sliding, toward the one side, of the piston member 31 slid to the one side by a driving force generated by the gas generator 38. The groove 35c is provided on the inner peripheral surface of the stopper portion 35b along the circumferential direction of the stopper portion 35b.

The seal member 36 is provided in the groove 35c along the circumferential direction of the stopper portion 35b. The seal member 36 is in contact with the groove 35c and the outer peripheral surface of the piston member 31. The seal member 36 is an O-ring or the like.

In the base 37, an end portion on the other side of the cylinder 35 is crimped and fixed. For example, a bolt (not illustrated) is fastened via a mount member (not illustrated) into a bore 37e (with an internal thread) provided in a flange portion 37b of the base 37 to fix the base 37 to the mount member, and the mount member is fixed to the flight vehicle 1 to fix the base 37 to the flight vehicle 1. The base 37 is a squib holder. The base 37 includes an approximately cylindrical member 37a, the flange portion 37b, and an insertion port 37c.

The approximately cylindrical member 37a holds the gas generator 38 on the cylinder 35 side. The flange portion 37b is provided on the approximately cylindrical member 37a on the side opposite from the cylinder 35 side. The flange portion 37b includes a plurality of bores 37d. Each bore 37d is used to attach the base 37 to the container 10. The inner peripheral surface of the bore 37d is internally threaded, and a bolt 40 inserted from the inside of the container 10 is screwed. The insertion port 37c is used to insert a connector 51 for energization of an electrode 38b of the gas generator 38.

The gas generator 38 is an example of a power source that is positioned on the other side of the piston member 31 and generates a driving force for sliding of the piston member 31 toward the one side. The gas generator 38 is disposed, in a state of being inserted into an opening on the other side of the cylinder 35, on the other side of the piston member 31. As the gas generator 38, only an igniter may be used, or a gas generator including an igniter and a gas generating agent may be used. Alternatively, a hybrid type or stored type gas generator may be used that cleaves a sealing plate in a small gas cylinder by a gunpowder type igniter and discharges internal gas to the outside. In this case, as the pressurized gas in the gas cylinder, a non-flammable gas such as argon, helium, nitrogen, or carbon dioxide or a mixture thereof can be used. In order to reliably propel the piston when the pressurized gas is released, the gas generator may be provided with a heating element including a gas generating agent composition, a thermite composition, or the like. The gas generator 38 is a micro gas generator or the like. The gas generator 38 includes a cup body 38a and a plurality of electrodes 38b.

An igniter is disposed inside the cup body 38a. Furthermore, for example, a gas generating agent, a gas cylinder, and/or a heating element are appropriately disposed inside the cup body 38a. The electrode 38b is electrically connected to the igniter disposed inside the cup body 38a.

The bolt 40 is a member for fixing of the container 10 and the actuator 30. The bolt 40 is inserted into the bore 11e from the inside of the container 10 and screwed into the bore 37d. The bolt 40 is fastened, and thus the container 10 and the actuator 30 are fixed.

The harness 50 is a member for electrical connection between the gas generator 38 and a trigger device 60 (described below). The harness 50 includes the connector 51, a wiring 52, and a connector 53.

The connector 51 is positioned on the other side of the gas generator 38 and connected to the electrode 38b. The wiring 52 is connected to the connector 51 and the connector 53. The connector 53 is connected to the trigger device 60. Thus, a signal from the trigger device 60 is supplied to the gas generator 38 to activate the gas generator 38.

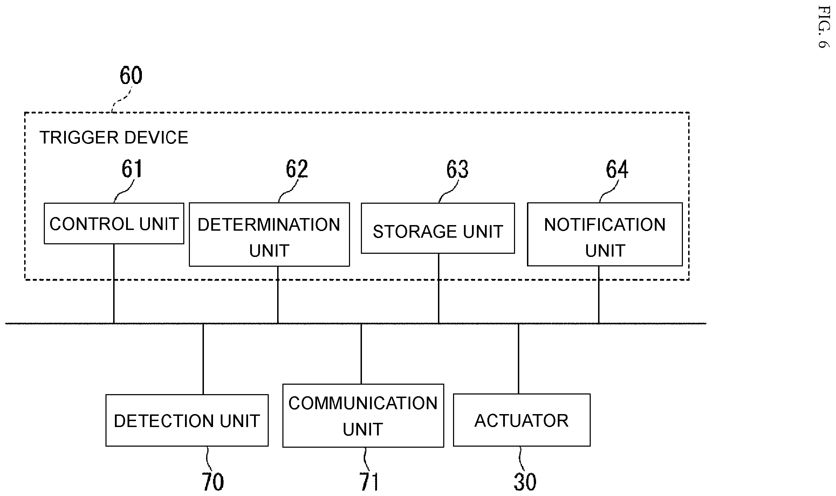

As illustrated in FIG. 6, the safety device 100 includes the trigger device 60. For example, the trigger device 60 is contained in a case (not illustrated) or the like and is mounted on the flight vehicle 1. The trigger device 60 includes a control unit 61, a determination unit 62, a storage unit 63, and a notification unit 64. The control unit 61 includes a CPU, a ROM, a RAM, and the like. The determination unit 62 determines whether the flight vehicle 1 is in an abnormal state on the basis of a signal received from a detection unit 70 that detects the state (failure, out of control, flight status (flight attitude, speed, angular velocity, altitude, attitude angle, and the like), distance to an obstacle, position information, and the like) of the flight vehicle 1. The trigger device 60 executes various programs (a signal transmission program, a signal reception program, and the like) using the CPU, and thus the trigger device 60 can automatically transmit a command signal, an activation signal, and the like to each part according to a situation (for example, when the flight vehicle 1 is in an abnormal state (at the time of abnormality)), or can receive a command signal and the like from the outside via a communication unit 71 and transmit a command signal, an activation signal, and the like to each part. The trigger device 60 has functions as follows. For example, when the flight vehicle 1 is in an abnormal state, the trigger device 60 executes various programs using the CPU to transmit an automatic activation signal for automatic activation of the actuator 30 to the actuator 30, or when the trigger device 60 receives a trigger signal from a remote signal transceiver operated by an operator, the trigger device 60 executes various programs using the CPU to transmit an activation signal for activation of the actuator 30 to the actuator 30.

Here, examples of the detection unit 70 include a signal reception sensor, an acceleration sensor, a gyro sensor, an atmospheric pressure sensor, a global positioning system (GPS), a laser sensor, an ultrasonic sensor, an infrared sensor, a millimeter wave radar, a submillimeter wave radar, a speed sensor, a single or compound eye vision sensor, an energy amount sensor, a wind direction detection sensor, and the like, and include at least one or more of these. Other examples of the detection unit 70 may include a detection unit that detects transmission of an emergency signal from an emergency signal transmission device in response to an operation of an operator, and a detection unit that detects a failure of equipment provided in the flight vehicle 1.

The above-described phrase "at the time of abnormality" refers to a case where the determination unit 62 determines that the flight vehicle 1 is in an abnormal state (failure, out of control, abnormal fall, and the like) on the basis of a signal from the above-described detection unit 70 provided in the flight vehicle 1 or the safety device 100. Specifically, the phrase refers to a case where the determination unit 62 determines occurrence of any one or more of the following states: "loss of a signal from the control unit of the flight vehicle 1 for a certain period of time or more or reception of an abnormal signal from the control unit of the flight vehicle 1"; "loss of a signal from a remote signal transceiver for a certain period of time or more or reception of an abnormal signal from the remote signal transceiver"; "loss of a signal from a ground station for a certain period of time or more or reception of an abnormal signal from the ground station in the case of communicating with the ground station (including a relay station)"; "approach or entrance of the flight vehicle 1 to a prohibited area, or deviation of the flight vehicle 1 from a planned route, detected from the position information of the flight vehicle 1"; "a prescribed value or less of the remaining amount of the power supply (battery) or the fuel of the flight vehicle 1"; "a prescribed value or less, or a prescribed value or more of the acceleration of the flight vehicle 1"; "a prescribed value or more of the angular velocity of the flight vehicle 1"; "a prescribed value or more of the attitude angle of the flight vehicle 1 (for example, a state of being inclined by 45° or more with respect to the horizontal)"; "approach to an obstacle that may damage the flight vehicle 1 (detected by a laser sensor (LiDAR or the like) or an infrared sensor, or detected by a vision sensor and image analysis)"; "occurrence of an emergency state of a human inside the flight vehicle 1 in the case of the flight vehicle 1 capable of carrying a human (detected by an emergency signal transmitted from an emergency signal transmission device)"; "a fatal failure of equipment provided in the flight vehicle 1"; and the like.

The control unit 61 is an example of an activation unit that activates the actuator 30 in at least one of a case where the state of the flight vehicle 1 is determined to be an abnormal state or a case where an instruction to activate the actuator 30 is received from an operator of the flight vehicle 1. As described above, the control unit 61 transmits a signal for activation of the actuator 30 to the actuator 30 to activate the actuator 30. Specifically, the control unit 61 transmits a signal for activation of the gas generator 38 to the gas generator 38 to activate the gas generator 38.

The control unit 61 is an example of a stop unit that stops one or more propulsion mechanisms 3 (described below) when the determination unit 62 determines that the flight vehicle 1 is in an abnormal state. For example, the control unit 61 stops the one or more propulsion mechanisms 3 by transmitting a signal for stopping of the one or more propulsion mechanisms 3 via the communication unit 71 to the control unit, in the flight vehicle 1, that controls the one or more propulsion mechanisms 3. Specifically, for example, the control unit 61 stops the one or more propulsion mechanisms 3 by "signal interruption or zero throttle signal occupancy between the ESC and the FC", "signal interruption or zero throttle signal occupancy between the ESC and the motor", "transmission of a motor stop request to the FC", "transmission of a motor stop request to the companion computer", "transmission of a request for motor signal interruption or current interruption to the PMU", "power interruption between the ESC and the motor", "power interruption between the ESC and the PMU", "power interruption between the FC and the battery", "power interruption between the PMU and the battery", or the like.

The determination unit 62 determines whether the flight vehicle 1 is in an abnormal state. As described above, for example, the determination unit 62 determines whether the flight vehicle 1 is in an abnormal state on the basis of a signal received from the detection unit 70 that detects the state (failure, out of control, flight status (flight attitude, speed, angular velocity, altitude, attitude angle, and the like), distance to an obstacle, position information, and the like) of the flight vehicle 1. Specifically, for example, the determination unit 62 determines that the flight vehicle 1 is in an abnormal state when flight vehicle 1 is in a failure or an uncontrollable state. Furthermore, the determination unit 62 determines that the flight vehicle 1 is in an abnormal state when the flight attitude, the speed, the angular velocity, the altitude, the attitude angle, or the like is a threshold or more, or a threshold or less. The determination unit 62 determines that the flight vehicle 1 is in an abnormal state when the distance to an obstacle is a threshold or less. The determination unit 62 determines that the flight vehicle 1 is in an abnormal state when the flight vehicle 1 is positioned out of a predetermined range. For example, the determination unit 62 includes a CPU, a ROM, a RAM, and the like.

When the determination unit 62 determines that the flight vehicle 1 is in an abnormal state, the storage unit 63 stores the determination data at this time. For example, the determination data include the type of the abnormality, the time of determination of the abnormality, and the like. For example, the storage unit 63 includes a ROM, a RAM, and the like.

The notification unit 64 notifies that the flight vehicle 1 is in an abnormal state using at least one of sound or light when the determination unit 62 determines that the flight vehicle 1 is in an abnormal state. For example, the notification unit 64 includes a loudspeaker or the like that makes a sound such as an alarm. Furthermore, the notification unit 64 includes an LED or the like that emits light, such as a warning light.

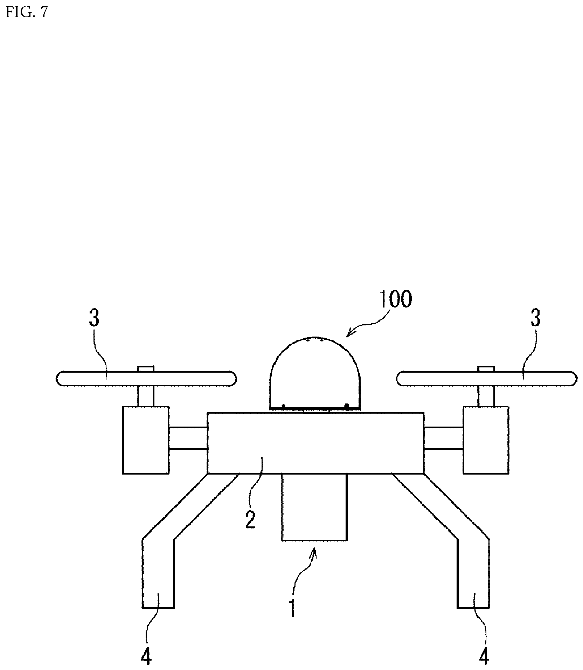

Next, the flight vehicle 1 will be described with reference to FIG. 7. As illustrated in FIG. 7, the flight vehicle 1 includes an airframe 2, a plurality of propulsion mechanisms 3, a plurality of legs 4, and the safety device 100.

Each propulsion mechanism 3 is coupled to the airframe 2, and propels the airframe 2. For example, the propulsion mechanism 3 is a propeller or the like. Each leg 4 is provided on a lower part of the airframe 2. For example, the safety device 100 is coupled to the airframe 2 via the above-described mount member.

The airframe 2 may include an airbag (gunpowder, hybrid, cylinder, fan, natural intake), a float (hybrid, cylinder, natural intake) disposed separately from a parachute, and an alarm (alert, LED). In a case where the flight vehicle 1 is a flying vehicle, the airframe 2 may include an impact-absorbing seat for a person.

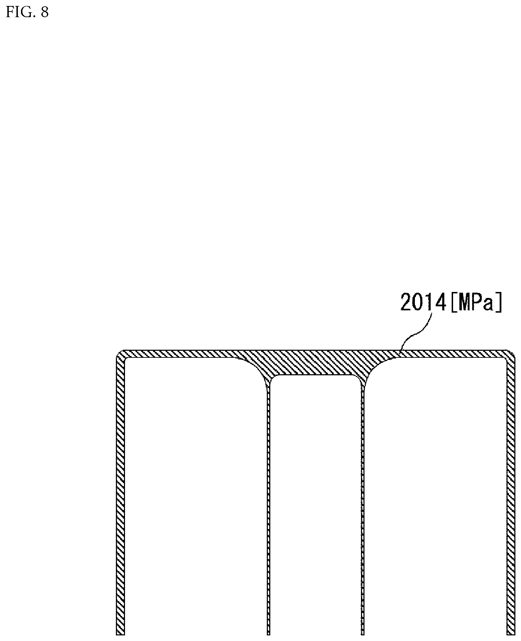

Next, results of computer analysis of a stress in a lid according to a first comparative example, a second comparative example, and a first example will be described with reference to FIGS. 8 to 10. For the computer analysis of a stress, the software "Autodesk Inventor Nastran" (manufactured by Autodesk Inc.) was used.

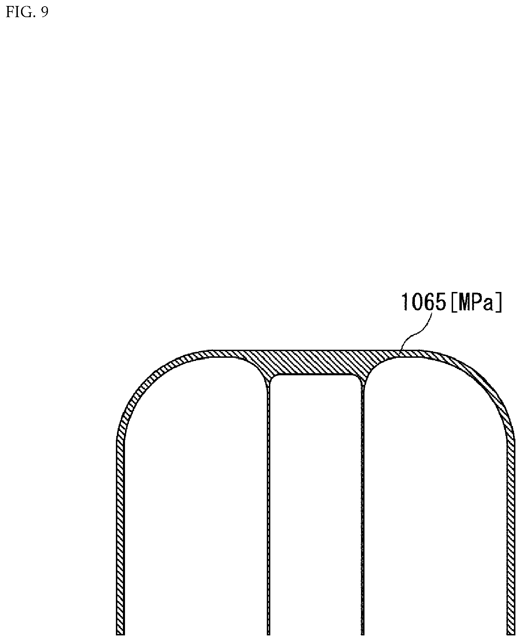

As illustrated in FIG. 8, the lid according to the first comparative example is different from the lid 12 mainly in that the lid includes a flat plate-shaped top plate portion orthogonal to the sliding direction instead of the top plate portion 12a. As illustrated in FIG. 9, the lid according to the second comparative example is different from the lid according to the first comparative example mainly in that the radius of a curved surface connecting the top plate portion and a side wall portion is larger than in the first comparative example. As illustrated in FIG. 9, the lid according to the first example is similar to the lid 12. Portions other than the portions particularly described in this paragraph have similar dimensions and similar shapes in FIGS. 8 to 10.

In all of the first comparative example, the second comparative example, and the first example, the above-described analysis was performed, in a state where pins were inserted and fixed in bores (at two places) formed in the same manner as the bore 12g, under the condition that a load of 160000 [N] was applied to a receiving surface corresponding to the receiving surface 12f of the receiving portion 12b toward the one side.

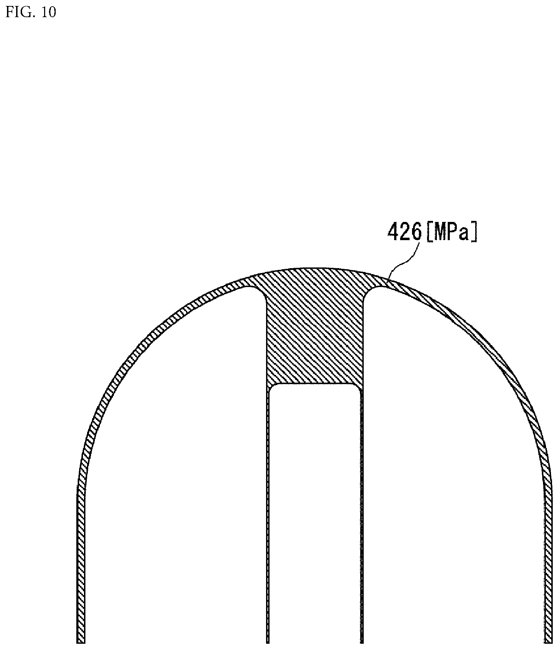

As illustrated in FIG. 8, the above analysis has determined that the curved surface of the top plate portion of the lid according to the first comparative example had a portion to which a maximum stress of 2014 [MPa] was applied (an outer edge portion of the joint portion between the receiving portion and the top plate portion). As illustrated in FIG. 9, the above analysis has determined that the top plate portion of the lid according to the second comparative example had a portion to which a maximum stress of 1065 [MPa] was applied (an outer edge portion of the joint portion between the receiving portion and the top plate portion). Meanwhile, as illustrated in FIG. 10, the above analysis has determined that the curved surface of the top plate portion of the lid according to the first example had a portion to which only a maximum stress of 426 [MPa] was applied.

As described above, it has been found that the stress applied to the top plate portion including the curved surface being curved is lower than that applied to the flat plate-shaped top plate portion. Furthermore, it has been found that the flat plate-shaped top plate portion and the top plate portion including the curved surface being curved have different positions where the maximum stress is generated. That is, it has been found that in the flat plate-shaped top plate portion, not only the maximum stress is generated in the outer edge portion of the joint portion between the receiving portion and the top plate portion, but also a stress is generated that is about twice as high as that in the top plate portion including the curved surface being curved. Therefore, it has been found that the outer edge portion of the joint portion between the receiving portion and the top plate portion in the flat plate-shaped top plate portion needs to have a much higher strength than the top plate portion including the curved surface being curved.

As described above, the safety device 100 in the first embodiment of the present invention is a safety device for the flight vehicle 1, and includes the container 10 including the lid 12, the ejection object 20 contained in the container 10, and the actuator 30 including the piston member 31 that slides toward the one side to push the lid 12 from the inside to remove the lid 12 and including the gas generator 38 that generates a driving force for sliding of the piston member 31 toward the one side, the lid 12 includes the top plate portion 12a that is positioned on the one side with respect to the piston member 31 and includes a curved surface being curved convexly toward the one side and formed in an outer surface of the top plate portion 12a, and the lid 12 includes the receiving portion 12b that protrudes from the inner surface 12e of the top plate portion 12a toward the other side and receives the piston member 31 when the piston member 31 slides toward the one side.

Accordingly, when the receiving portion 12b is pushed toward the one side, the stress applied to the top plate portion 12a (particularly, the curved surface) can be dispersed to be lowered by the receiving portion 12b that protrudes from the inner surface 12e of the top plate portion 12a toward the other side and receives the piston member 31 when the piston member 31 slides to the one side. Thus, a design is facilitated such that damage to the top plate portion 12a is suppressed when the lid 12 is pushed from the inside in order to remove the lid 12, and as a result, the ejection object 20 can be more appropriately ejected while the weight is lighter than in conventional cases. That is, prevention of damage to the top plate portion 12 does not need, for example, an adjustment of the pushing force (driving force) generated by the actuator 30 to a lower level than in conventional cases, so that the ejection object 20 can be ejected from the container 10 as in conventional cases. Furthermore, the lid 12 does not need to have a higher strength (for example, an increase in the thickness is unnecessary, and such a strength can be achieved without using a material having a relatively high strength) than in conventional cases, and therefore the safety device 100 can be obtained that can be easily manufactured and can suppress the cost while the weight is relatively light. Furthermore, the top plate portion 12a is curved, and therefore the value of the drag coefficient becomes further small, and the air resistance can be reduced, so that consumption of the battery mounted on the flight vehicle 1 can be suppressed. Furthermore, since the top plate portion 12a is curved, the appearance can give a person a soft impression.

In the safety device 100 in the first embodiment of the present invention, the top plate portion 12a has a hollow hemispherical shape or a dome shape.

Accordingly, when the receiving portion 12b is pushed toward the one side, the stress applied to the top plate portion 12a (particularly, the curved surface) can be further dispersed to be further lowered. Thus, damage to the top plate portion 12a can be further suppressed when the lid 12 is pushed from the inside in order to remove the lid 12, and the ejection object 20 can be appropriately ejected.

In the safety device 100 in the first embodiment of the present invention, the receiving portion 12b includes the receiving surface 12f that is orthogonal to the sliding direction of the piston member 31 and receives the piston member 31 when the piston member 31 slides toward the one side.

Accordingly, when the receiving portion 12b is pushed toward the one side, the stress applied to the top plate portion 12a (particularly, the curved surface) can be further dispersed to be further lowered. Thus, damage to the top plate portion 12a can be further suppressed when the lid 12 is pushed from the inside in order to remove the lid 12, and the ejection object 20 can be appropriately ejected.

The safety device 100 in the first embodiment of the present invention includes the trigger device 60 including the control unit 61 that activates the actuator 30 in at least one of a case where the state of the flight vehicle 1 is determined to be an abnormal state or a case where an instruction to activate the actuator 30 is received from an operator of the flight vehicle 1.

Accordingly, the actuator 30 can be activated in at least one of a case where the state of the flight vehicle 1 is determined to be an abnormal state or a case where an instruction to activate the actuator 30 is received from an operator of the flight vehicle 1.

In the safety device 100 in the first embodiment of the present invention, the flight vehicle 1 includes the airframe 2 and the one or more propulsion mechanisms 3 coupled to the airframe 2 and configured to propel the airframe 2, the trigger device 60 includes the determination unit 62 that determines whether the flight vehicle 1 is in an abnormal state, and the trigger device 60 includes the control unit 61 that stops the one or more propulsion mechanisms 3 when the determination unit 62 determines that the flight vehicle 1 is in an abnormal state.

Accordingly, the one or more propulsion mechanisms 3 can be stopped when the state of the flight vehicle 1 is determined to be an abnormal state.

In the safety device 100 in the first embodiment of the present invention, the trigger device 60 includes the determination unit 62 that determines whether the flight vehicle 1 is in an abnormal state, and the trigger device 60 includes the storage unit 63 that stores a determination data when the determination unit 62 determines that the flight vehicle 1 is in an abnormal state.

Accordingly, when the determination unit 62 determines that the flight vehicle 1 is in an abnormal state, the determination data at this time can be stored.

In the safety device 100 in the first embodiment of the present invention, the trigger device 60 includes the determination unit 62 that determines whether the flight vehicle 1 is in an abnormal state, and the trigger device 60 includes the notification unit 64 that notifies that the flight vehicle 1 is in an abnormal state using at least one of sound or light when the determination unit 62 determines that the flight vehicle 1 is in an abnormal state.

Accordingly, when the determination unit 62 determines that the flight vehicle 1 is in an abnormal state, the fact that the flight vehicle 1 is in an abnormal state can be notified using at least one of sound or light.

In the safety device 100 in the first embodiment of the present invention, the ejection object 20 is a float parachute, a net, a fire extinguishing agent, a life saving tool, or a medicine.

Accordingly, a float parachute, a net, a fire extinguishing agent, a life saving tool, or a medicine can be ejected.

The flight vehicle 1 in the first embodiment of the present invention includes the airframe 2, the safety device 100 coupled to the airframe 2, and the one or more propulsion mechanisms 3 coupled to the airframe 2 and configured to propel the airframe 2.

Accordingly, an effect similar to that of the safety device 100 is obtained.

### <First modification example>

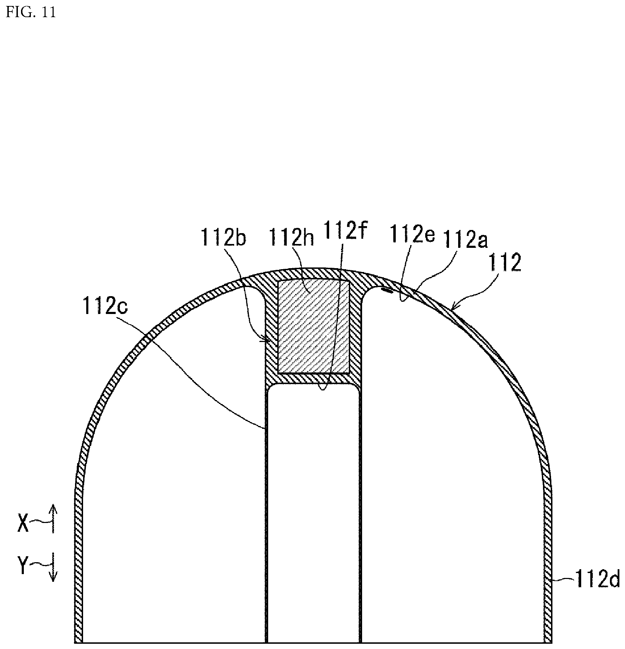

Hereinafter, a lid according to a first modification example will be described with reference to FIG. 11. In the present modification example, a reference sign having the same numbers in the last two digits as in the first embodiment refers to an element similar to that in the first embodiment, and thus description of the element may be omitted. A portion that is not particularly described is similar to that of the safety device and the flight vehicle in the first embodiment, and thus description of the portion may be omitted.

As illustrated in FIG. 11, a lid 112 according to the present modification example is different from the lid 12 according to the first embodiment mainly in that the lid 112 includes a receiving portion 112b instead of the receiving portion 12b. In FIG. 11, illustration of a bore corresponding to the bore 12g is omitted.

The receiving portion 112b is different from the receiving portion 12b mainly in that a foaming member 112h is provided inside the receiving portion 112b. The foaming member 112h has a lighter weight than a portion covering the foaming member 112h in the receiving portion 112b, a top plate portion 112a, and the like, and has elasticity. Therefore, the disposition of the foaming member 112h enables reduction of the weight of the lid 112. Furthermore, the disposition of the foaming member 112h enables absorption of a load applied to the receiving portion 112b when a piston member 31 pushes the receiving portion 112b. Changing the density of the foaming member 112h can change the degree of absorption of a load applied to the receiving portion 112b when the piston member 31 pushes the receiving portion 112b.

The safety device 100 of the first embodiment may include the lid 112 according to the present modification example instead of the lid 12.

### <Second modification example>

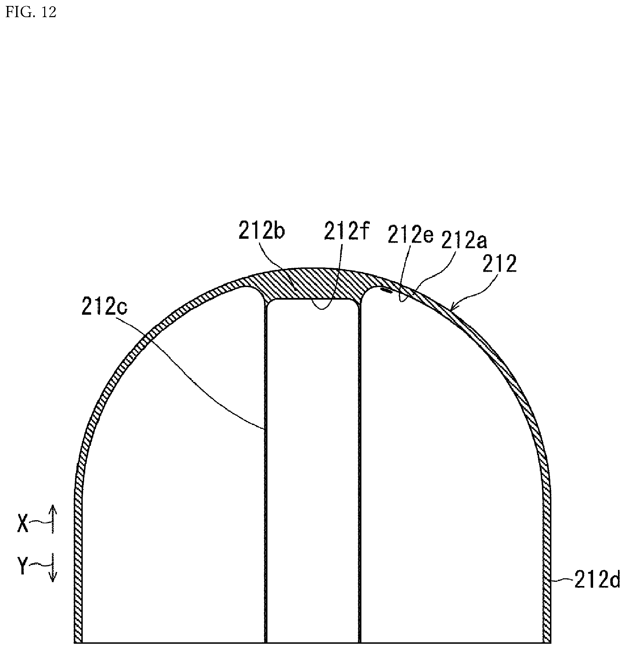

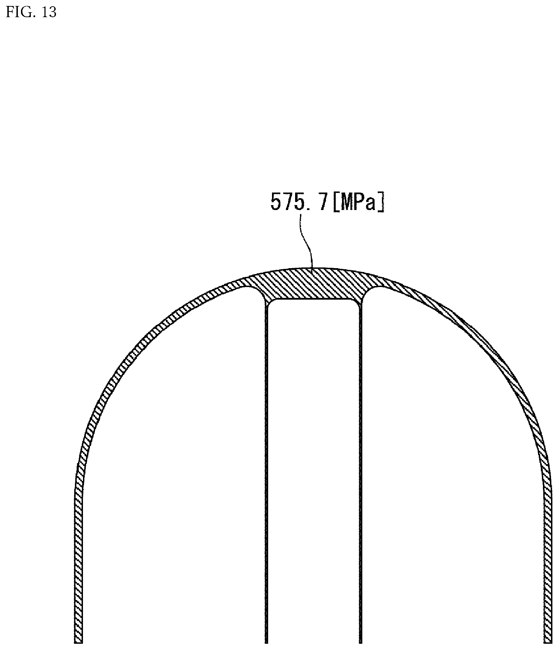

Hereinafter, a lid according to a second modification example will be described with reference to FIGS 12 and 13. In the present modification example, a reference sign having the same numbers in the last two digits as in the first embodiment refers to an element similar to that in the first embodiment, and thus description of the element may be omitted. A portion that is not particularly described is similar to that of the safety device and the flight vehicle in the first embodiment, and thus description of the portion may be omitted.

As illustrated in FIG. 12, a lid 212 according to the present modification example is different from the lid 12 according to the first embodiment mainly in that the lid 212 includes a receiving portion 212b instead of the receiving portion 12b. In FIG. 12, illustration of a bore corresponding to the bore 12g is omitted.

The receiving portion 212b is different from the receiving portion 12b mainly in that the receiving portion 212b is thinner than the receiving portion 12b in the sliding direction. The receiving portion 212b thinner than the receiving portion 12b in the sliding direction can reduce the weight of the lid 212.

The safety device 100 of the first embodiment may include the lid 212 according to the present modification example instead of the lid 12.

Next, a result of analysis of a stress in a lid according to a second example will be described with reference to FIG. 13.

As illustrated in FIG. 13, the lid according to the second example is similar to the lid 212.

Also in the second example, as in the first example, in a state where pins were inserted and fixed in bores (at two places) formed in the same manner as the bore 12g, a load of 160000 [N] was applied to a receiving portion corresponding to the receiving portion 212b toward the one side.

A maximum stress of 575.7 [MPa] was applied to a top plate portion of the lid according to the second example. The maximum stress applied to the top plate portion of the lid according to the second example is higher than that according to the first example, but is lower than those according to the first comparative example and the second comparative example.

As described above, it has been found that the stress applied to the top plate portion being curved is lower than that applied to the flat plate-shaped top plate portion.

### <Second embodiment>

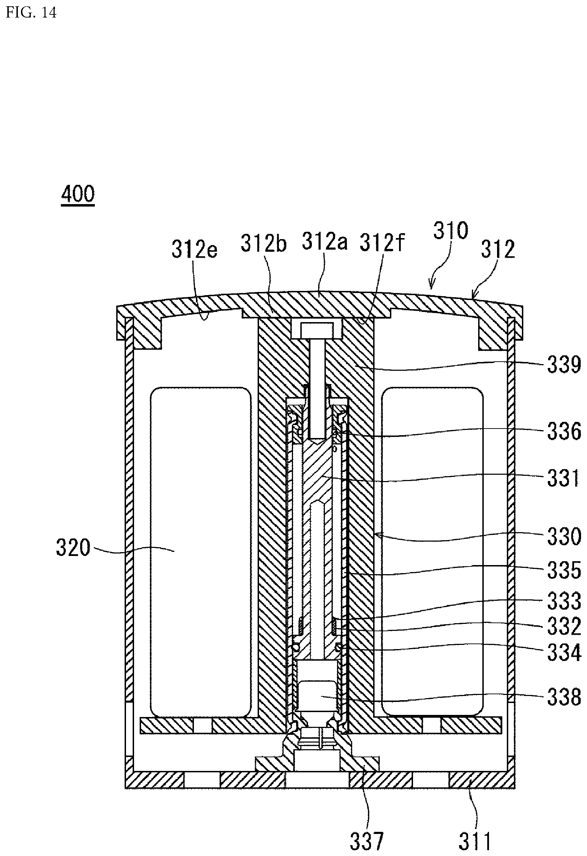

Hereinafter, a safety device according to a second embodiment will be described with reference to FIG. 14. In the present embodiment, a reference sign having the same numbers in the last two digits as in the first embodiment refers to an element similar to that in the first embodiment, and thus description of the element may be omitted. A portion that is not particularly described is similar to that of the safety device and the flight vehicle in the first embodiment, and thus description of the portion may be omitted.

As illustrated in FIG. 14, a safety device 400 according to the present embodiment includes a container 310, an ejection object 320, and an actuator 330.

The container 310 includes a main body 311 and a lid 312. The main body 311 has a cylindrical shape opened toward the one side. The lid 312 is attached to the main body 311 so as to close an opening of the main body 311. As described above, the main body may have a cylindrical shape opened toward the one side, and the lid may be attached to the main body so as to close the opening of the main body.

The actuator 330 further includes a support member 339. The support member 339 is a hat-shaped member. The support member 339 is attached to an end portion on the one side of the piston member 331 and supports the ejection object 320. As described above, the actuator may include the support member.

When the piston member 331 slides toward the one side, a receiving portion 312b receives the piston member 331 via the support member 339. As described above, the receiving portion may receive the sliding member via the support member.

### <Third embodiment>

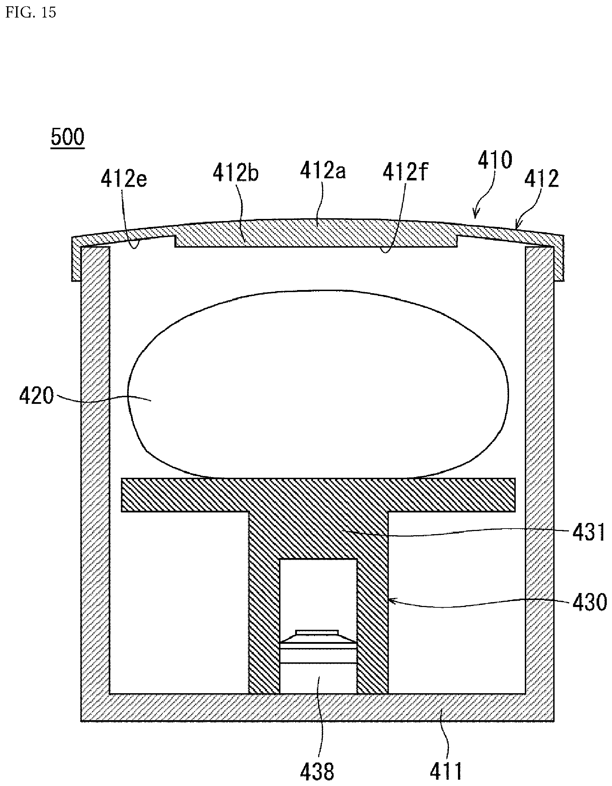

Hereinafter, a safety device according to a third embodiment will be described with reference to FIG. 15. In the present embodiment, a reference sign having the same numbers in the last two digits as in the first embodiment refers to an element similar to that in the first embodiment, and thus description of the element may be omitted. A portion that is not particularly described is similar to that of the safety device and the flight vehicle in the first embodiment, and thus description of the portion may be omitted.

As illustrated in FIG. 15, a safety device 500 according to the present embodiment includes a container 410, an ejection object 420, and an actuator 430.

The container 410 includes a main body 411 and a lid 412. The main body 411 has a cylindrical shape opened toward the one side. The lid 412 is attached to the main body 411 so as to close an opening of the main body 411. As described above, the main body may have a cylindrical shape opened toward the one side, and the lid may be attached to the main body so as to close the opening of the main body.

The ejection object 420 is disposed on the piston member 431 of the actuator 430. As described above, the ejection object may be disposed on the sliding member of the actuator.

When the piston member 431 slides toward the one side, a receiving portion 412b receives the piston member 431 via the ejection object 420. As described above, the receiving portion may receive the sliding member via the ejection object.

<Another embodiment>

Although the embodiments of the present invention are described above with reference to the drawings, specific configurations are not limited to these embodiments. The scope of the present invention is defined not by the description of the above embodiments but by the claims, and includes meanings equivalent to the claims and all modifications within the scope.

In the above embodiments, a parachute, a paraglider, and the like exemplify the ejection object, but the ejection object is not limited thereto, and for example, an object including a lift generation member may be ejected as the ejection object. Here, examples of the lift generation member include a parafoil, a Rogallo parachute, a single surface parachute, an airplane wing, a propeller, and a balloon. In a case where the lift generation member includes a control line, the safety device desirably includes a steering mechanism capable of changing an inclination angle of the ejected lift generation member using the control line. This steering mechanism includes, for example, a plurality of reels that wind up a plurality of control lines joined to the lift generation member, respectively, and a motor that serves as power of these reels. The steering mechanism drives the motor to wind up or off the control lines, and thus can appropriately pull the lift generation member or loosen the pulling.

The ejection object may be a pilot chute, and the safety device may include a parachute connected to the pilot chute. In this case, for example, the safety device may include a container that contains the parachute, in addition to the container that contains the pilot chute.

In the above embodiments, a case where the receiving surface is orthogonal to the sliding direction is described, but the present invention is not limited to such a case. For example, the receiving surface may be a convex surface or a concave surface. For example, in a case where an end surface on the one side of the sliding member is a concave surface, the receiving surface may be a convex surface along the concave surface. Alternatively, in a case where an end surface on the one side of the sliding member is a convex surface, the receiving surface may be a concave surface along the convex surface.

In the above embodiments, a gas generator is employed as the power source. However, the configuration is not limited as long as a driving force for propelling of the sliding member along the cylinder can be applied to the sliding member. For example, an elastic body such as a spring may be employed.

### REFERENCE SIGNS LIST

1 flight vehicle
2 airframe
3 propulsion mechanism
4 leg
10, 310, 410 container
11, 31a, 311, 411 main body
11a bottom portion
11b, 11hprotruding portion
11c, 12d, 112d, 212d side wall portion
11d, 11e, 11f, 11i, 12g, 31c, 35a, 37e bore
11g annular portion
12, 112, 212, 312, 412 lid
12a, 112a, 212a, 312a, 412a top plate portion
12b, 112b, 212b, 312b, 412b receiving portion
12c, 112c, 212c cylindrical portion
12e, 112e, 212e, 312e, 412e inner surface
12f, 112f, 212f, 312f, 412f receiving surface
13 pin
20, 320, 420 ejection object
30, 330, 430 actuator
31, 331, 431 piston member
31b rod-shaped portion
31d, 35cgroove
32, 332 tubular member
33, 333 holding member
34, 334 seal member
35, 335 cylinder
35b stopper portion
36, 336 seal member
37, 337 base
37a approximately cylindrical member
37b flange portion
37c insertion port
38, 338, 438 gas generator
38a cup body
38b electrode
40 bolt
50 harness
51, 53 connector
52 wiring
60 trigger device
61 control unit
62 determination unit
63 storage unit
64 notification unit
70 detection unit
71 communication unit
100, 400, 500 safety device
112h foaming member
339 support member

## Claims

1. A safety device for a flight vehicle, the safety device comprising:
a container including a lid;
an ejection object contained in the container; and
an actuator including a sliding member that slides toward one side to push the lid from an inside to remove the lid, the actuator including a power source that generates a driving force for sliding of the sliding member toward the one side,
the lid including a top plate portion that is positioned on the one side with respect to the sliding member and includes a curved surface being curved convexly toward the one side and formed in at least a part of an outer surface of the top plate portion, the lid including a receiving portion that protrudes from an inner surface of the top plate portion toward a side opposite from the one side and receives the sliding member when the sliding member slides toward the one side.

2. The safety device according to claim 1, wherein
the top plate portion at least partly includes a hollow hemispherical portion or a dome-shaped portion, and
the curved surface is formed in at least a part of the hollow hemispherical portion or the dome-shaped portion of the top plate portion.

3. The safety device according to claim 1 or 2, wherein
the receiving portion includes a receiving surface that is orthogonal to a sliding direction of the sliding member and receives the sliding member when the sliding member slides toward the one side, and
the sliding member includes a surface that pushes the receiving surface at a time of activation, the surface formed at an end portion of the sliding member on a side facing the receiving surface.

4. The safety device according to claim 1 or 2, comprising a trigger device including an activation unit that activates the actuator in at least one of a case where a state of the flight vehicle is determined to be an abnormal state or a case where an instruction to activate the actuator is received from an operator of the flight vehicle.

5. The safety device according to claim 4, wherein
the flight vehicle includes an airframe and one or more propulsion mechanisms coupled to the airframe and configured to propel the airframe, and
the trigger device includes a determination unit that determines whether the flight vehicle is in an abnormal state, and the trigger device includes a stop unit that stops the one or more propulsion mechanisms when the determination unit determines that the flight vehicle is in an abnormal state.

6. The safety device according to claim 4, wherein the trigger device includes a determination unit that determines whether the flight vehicle is in an abnormal state, and the trigger device includes a storage unit that stores a determination data when the determination unit determines that the flight vehicle is in an abnormal state.

7. The safety device according to claim 4, wherein the trigger device includes a determination unit that determines whether the flight vehicle is in an abnormal state, and the trigger device includes a notification unit that notifies that the flight vehicle is in an abnormal state using at least one of sound or light when the determination unit determines that the flight vehicle is in an abnormal state.

8. The safety device according to claim 1 or 2, wherein
the ejection object is a pilot chute,
the safety device comprising a parachute connected to the pilot chute.

9. The safety device according to claim 1 or 2, wherein the ejection object is a float parachute, a net, a fire extinguishing agent, a life saving tool, or a medicine.

10. A flight vehicle comprising:
an airframe;
the safety device according to claim 1 or 2 coupled to the airframe; and
one or more propulsion mechanisms coupled to the airframe and configured to propel the airframe.
